# EUROPÄISCHE PATENTSCHRIFT

(11) **EP 2 017 473 B1**
(45) Veröffentlichungstag und Bekanntmachung des Hinweises auf die Patenterteilung: **23.05.2018**
(21) Anmeldenummer: 08012394.6
(22) Anmeldetag: 09.07.2008
(51) Int. Cl.: F03D 9/00, H02J 3/38

(54) **Windenergieanlage mit erweitertem Drehzahlbereich**
Wind farm with increased revolution speed
Eolienne dotée d'une plage de vitesses de rotation étendue

(30) Priorität: 10.07.2007 DE 102007032179
(43) Veröffentlichungstag der Anmeldung: 21.01.2009
(73) Patentinhaber: Senvion GmbH, 22297 Hamburg (DE)
(72) Erfinder: Letas, Heinz-Hermann, 23701 Süsel (DE)
(74) Vertreter: Glawe, Delfs, Moll

(56) Entgegenhaltungen:
- EP-A1- 1 499 009
- US-A- 4 994 684
- US-A1- 2007 069 522

## Beschreibung

Die Erfindung betrifft eine Windenergieanlage mit einem Windrotor, einem damit angetriebenen doppelt gespeisten Asynchrongenerator und einem Umrichter zur Einspeisung elektrischer Leistung in ein Netz, wobei ein maschinenseitiger Teil des Umrichters an einen Rotor und ein netzseitiger Teil an einen Stator der doppelt gespeisten Asynchronmaschine angeschlossen sind, und einer Steuereinrichtung mit einer Umrichterregelung vorgesehen ist, die den Umrichter auf Basis von vorgegebenen Parametern in einer Normalbetriebsart regelt.

Moderne Windenergieanlagen, insbesondere solche höherer Leistungsklassen im Megawattbereich, sind drehzahlvariabel ausgeführt. Dies bedeutet, dass die Drehzahl des Windrotors durch Verstellung des Anstellwinkels der Rotorblätter an die jeweils vorherrschenden Windbedingungen angepasst werden kann. Während bei niedrigen Windgeschwindigkeiten eine niedrige Drehzahl eingestellt wird, wird entsprechend bei hohen Windgeschwindigkeiten eine große Drehzahl eingestellt. Bei konstantem Moment in der Rotorwelle zwischen Windrotor und Generator gilt hierbei, dass je höher die Drehzahl ist, desto höher die übertragende Leistung und damit auch der Ertrag der Windenergieanlage. Eine Schwierigkeit besteht darin, dass aufgrund von Grenzparametern in der Windenergieanlage bestimmte Höchst- und Mindestdrehzahlen einzuhalten sind. In Bezug auf die Rotorspannung des Generators besteht die Beschränkung darin, dass auch bei Erreichen der Höchst- (bzw. Mindest-)Drehzahl die Spannung nicht höher werden darf als die maximal vom Umrichter erzeugbare Wechselspannung. Herkömmlicherweise wird daher das elektrische Übersetzungsverhältnis von doppelt gespeisten Asynchronmaschinen entsprechend gewählt. Damit kann erreicht werden, dass die Rotorspannung im Betrieb passend zu den Grenzwerten des Umrichters ist. Es hat sich aber gezeigt, dass bei sehr leistungsstarken Generatoren das an sich erforderliche Übersetzungsverhältnis nicht mehr realisierbar ist. Dies gilt insbesondere bei der Nachrüstung von Windenergieanlagen. Um dennoch die große Leistung übertragen zu können, ist es entweder erforderlich, den Umrichter gegen einen mit höherer Spannungsgrenze auszutauschen, was teuer ist, oder eine Einschränkung des Drehzahlbereichs der Windenergieanlage vorzusehen, was die Nutzbarkeit und damit den Ertrag den Windenergieanlage schmälert. Besonders störend ist bei der unter Kostengesichtspunkten vorteilhaften Einschränkung des Drehzahlbereichs, dass die verbleibende Drehzahlreserve für Windstärkenschwankungen, insbesondere für Böen, verloren geht. US 4994684 zeigt eine Windenergieanlage gemäss dem Obenbegriff des Anspruchs 1. Es ist bekannt, einen unerwünschten Anstieg der Rotorspannung bei abweichender Netzfrequenz durch Umschalten auf eine andere Drehmoment/Drehzahl-Kennlinie zu begrenzen (US 2007/069522 A1). Bei niedriger Last, d. h. einer Drehzahl unter der Synchrondrehzahl, wird die Kennlinie zu einem niedrigeren Drehmoment verschoben, so dass sich ein neuer Betriebspunkt bei etwas höherer Drehzahl, also näher an der Synchrondrehzahl, einstellt. Der Schlupf des Generators wird so verkleinert, wodurch die Rotorspannung verringert wird. Entsprechend wird bei hoher Last, d. h. einer Drehzahl über der Synchrondrehzahl, die Kennlinie zu höherem Drehmoment verschoben, so dass sich ein neuer Betriebspunkt bei etwas niedrigerer Drehzahl einstellt. Der Schlupf und damit die Rotorspannung werden so ebenfalls verringert. Nachteilig an diesem bekannten Ansatz ist, dass die Drehmoment/Drehzahl-Kennlinie zu mittleren Drehzahlen verschoben wird, wodurch u.a. die vorgesehene Maximaldrehzahl verringert wird. Die Böenreserve wird dadurch verkleinert, außerdem steigt die Drehmomentbelastung des Antriebsstrangs.

Der Erfindung liegt die Aufgabe zugrunde, eine Windenergieanlage der eingangs genannten Art dahingehend zu verbessern, dass auch bei hohen Leistungsklassen der Drehzahlbereich ohne Veränderung des Umrichters nicht eingeschränkt zu werden braucht. Die Erfindung betrifft eine Windenergieanlage gemäss dem Anspruch 1 und ein Verfahren gemäss dem Anspruch 8. Die erfindungsgemäße Lösung liegt in den Merkmalen der unabhängigen Ansprüche. Vorteilhafte Weiterbildungen sind Gegenstand der abhängigen Ansprüche.

Bei einer Windenergieanlage mit einem Windrotor, einem damit angetriebenen doppelt gespeisten Asynchrongenerator und einem Umrichter zur Einspeisung elektrischer Leistung in ein Netz, wobei ein generatorseitiger Teil des Umrichters an einen Rotor und ein netzseitiger Teil des Umrichters an einen Stator der doppelt gespeisten Asynchronmaschine angeschlossen sind, und einer Steuereinrichtung mit einer Umrichterregelung, ist gemäß der Erfindung ein Modusselektor vorgesehen, der mit der Umrichterregelung derart zusammenwirkt, dass sie zwischen zwei Betriebsarten umschaltbar ist, der Normalbetriebsart und einer Spannungssenkbetriebsart, bei der die Erregung des Generators gegenüber der Normalbetriebsart vermindert ist.

Mit dem Modusselektor wirkt die Erfindung gezielt auf die Umrichterregelung ein, um so eine bestimmte Betriebsart des Umrichters zu erzwingen, genauer gesagt von einem oder beiden Wechselrichtern des Umrichters. Beim Betrieb im übersynchronen Bereich, also mit hoher Last, kann vorgesehen sein, dass mindestens einer der Wechselrichter des Umrichters in den untererregten Betrieb gebracht wird. Dadurch erzeugt der Wechselrichter zusätzlichen (induktiven) Blindstrom, der spannungssenkend in Bezug auf die Rotorspannung wirkt. Damit kann das Überschreiten von Grenzwerten der Rotorspannung verhindert werden. Die Windenergieanlage kann somit auch bei hoher Leistung und damit hoher Drehzahl im übersynchronen Betrieb betrieben werden, dennoch bleibt für die Rotorspannung eine ausreichende Reserve erhalten. Eine Drehzahlbeschränkung zum Schutz des Generators bzw. Umrichters vor zu hohen Rotorspannungen ist dank der Erfindung nicht mehr erforderlich.

Nachfolgend seiner einige Begriffe erläutert:
Unter übersynchronen Betrieb wird ein Betreiben der Windenergieanlage bei Drehzahlen verstanden, die höher liegen als die Synchrondrehzahl. Dementsprechend ist ein synchroner Betrieb ein Betreiben der Windenergieanlage bei Synchrondrehzahl und ein untersynchroner Betrieb ein Betreiben bei Drehzahlen, die tiefer liegen als die Synchrondrehzahl. Letzteres erfolgt bei geringen Windgeschwindigkeiten, während mit zunehmendem Wind der synchrone Betrieb und dann der übersynchrone Betrieb gewählt wird. Wie sich aus vorstehendem ergibt, findet Betrieb mit hoher Last im übersynchronen Bereich statt.

Die Erfindung erreicht eine Reihe von Vorteilen. Zum einen wird eine Erweiterung des nutzbaren Drehzahlspektrums bei Begrenzung der Rotorspannung auf bestimmte Maximalwerte erreicht. Da die Drehzahlgrenzen nicht abgesenkt zu werden brauchen, steht die Drehzahlreserve genauso wie bei Anlagen geringerer Leistungsklassen zur Verfügung, so dass die erfindungsgemäße Windenergieanlage auch eine entsprechend hohe Böenfestigkeit aufweist. Die Erfindung bietet sich damit insbesondere auch für die Aufrüstung bestehender Windenergieanlagen an, wobei der Generator gegen einen höherer Leistung ausgetauscht wird; dank der erfindungsgemäßen Gestaltung ist ein entsprechender und kostspieliger Austausch des Umrichters gegen einen höherer Leistung nicht erforderlich. Die Erfindung ermöglicht es also, einen stärkeren Generator mit einem für eine geringere Leistungsklasse ausgelegten Umrichter zu betreiben, und dennoch das nutzbare Drehzahlband zu erhalten.

Vorzugsweise ist ein Spannungssensor vorgesehen, der die am Stator des Generators anliegende Spannung bestimmt und mit dem Modusselektor derart zusammenwirkt, dass die Erregung des Generators abhängig von der Statorspannung vermindert ist. Damit kann ein Spannungsabfall (Differenz zwischen Rotorspannung und Statorspannung) über den Generator so eingestellt werden, dass sich eine gewünschte Rotorspannung ergibt. Die Rotorspannung kann so vor einem unerwünschten Anstieg, beispielsweise aufgrund vom Normwert abweichender Netzspannung oder -frequenz, bewahrt werden.

Es kann eine Regelung für die Rotorspannung vorgesehen sein, die zweckmäßigerweise so ausgeführt ist, dass in der Spannungssenkbetriebsart eine Regelung der Rotorspannung auf einen einstellbaren Wert unterhalb des Werts in der Normalbetriebsart erfolgt. Dieser Wert wird als Niederwert bezeichnet. Dabei kann eine Sollwertbestimmungseinrichtung vorgesehen sein, die den Niederwert in Abhängigkeit von der Statorspannung und/oder der Netzfrequenz bestimmt. Die Erfindung hat erkannt, dass die Gefahr überhöhter Rotorspannungen gerade bei bestimmten Konstellationen mit tiefer Netzfrequenz von bspw. 47,5 Hz (in einem 50 Hz Netz) und/oder erhöhter Netzspannung (ca. ab 110 % des Sollwerts) besteht, und eine besonders hohe Blindstromerzeugung für den Rotor erfordert.

Für die erfindungsgemäße Erzeugung von Blindstrom zur Absenkung der Rotorspannung können grundsätzlich beide Wechselrichter, der generatorseitige wie auch der netzseitige Wechselrichter, des Umrichters eingesetzt sein. Mit Vorteil ist der generatorseitige Wechselrichter eingesetzt, da er das Übersetzungsverhältnis der doppelt gespeisten Asynchronmaschine als Verstärkungsfaktor nutzen kann, und außerdem der Spannungsabfall an der Generatorimpedanz ausgenutzt werden kann. Es soll aber nicht ausgeschlossen sein, dass zusätzlich oder alternativ der netzseitige Wechselrichter herangezogen wird.

Insbesondere für den netzseitigen Wechselrichter ist mit Vorteil ein Zusatzschaltmodul vorgesehen, welches den netzseitigen Wechselrichter in eine unter-, normal- oder übererregte Betriebsart bringt. Es wirkt mit dem Modusselektor wie nachfolgend beschrieben zusammen. Grundsätzlich wird die neutrale Betriebsart gewählt, und zwar dann, wenn der netzseitige Wechselrichter keinen Blindstrom zu erzeugen hat. Diese Betriebsart bietet sich insbesondere für Fälle hoher Spitzenwirkleistung an, wenn ohnehin kaum oder keine Stromreserve mehr zur Verfügung steht. Um den erwünschten Effekt der Spannungsabsenkung zu unterstützen, ist zweckmäßigerweise die untererregte Betriebsart angewählt. Dies gilt insbesondere dann, wenn die Spannungsabsenkung der Rotorspannung so hoch wie möglich sein soll. Es kann aber auch sein, dass zwar eine möglichst weitgehende Absenkung der Rotorspannung erreicht werden soll unter Zuhilfenahme des netzseitigen Wechselrichters, dass jedoch die Auswirkungen auf das Netz, an welches die Windenergieanlage angeschlossen ist, möglichst gering bleiben sollen. Dann würde die übererregte Betriebsart gewählt. Bei dieser Betriebsart sorgt der generatorseitige Wechselrichter für die gewünschte Rotorspannungsabsenkung, während der netzseitige Wechselrichter die Auswirkungen der von dem generatorseitigen Wechselrichter durchgeführte Blindleistungseinspeisung gering hält in Bezug auf das Verhalten am Netz.

Vorzugsweise wirkt das Zusatzschaltmodul mit einer Kompensationsanlage derart zusammen, dass diese im übererregten Betrieb den netzseitigen Wechselrichter unterstützt. Damit können insbesondere ohnehin vorhandene Kompensationsanlagen dazu genutzt sein, die erwünschte induktive Blindleistung bereitzustellen.

Darüber hinaus kann die Umrichterregelung dazu ausgebildet sein, die Rotorspannung zu messen und zu überwachen. Übersteigt die Rotorspannung einen vorgebbaren Grenzwert, aktiviert die Umrichterregelung Schutzeinrichtungen, wie z.B. eine Crowbar, zur Verringerung der Rotorspannung und schützt so den Generator vor Beschädigung durch überhöhte Rotorspannung.

Die Erfindung bezieht sich ferner auf ein Verfahren zum Betreiben einer Windenergieanlage, wobei eine Umrichterregelung den Umrichter so zwischen einer Normalbetriebsart und einer Spannungssenkbetriebsart umschaltet, dass die Erregung des Rotors des doppelt gespeisten Asynchrongenerators im übersynchronen Betrieb bei hoher Leistung (entsprechend hohen Windstärken) gegenüber der Normalbetriebsart verringert wird. Zur näheren Erläuterung wird auf obige Ausführungen verwiesen.

Die Erfindung wird nachfolgend unter Bezugnahme auf die beigefügte Zeichnung erläutert, in der ein vorteilhaftes Ausführungsbeispiel dargestellt ist. Es zeigen:

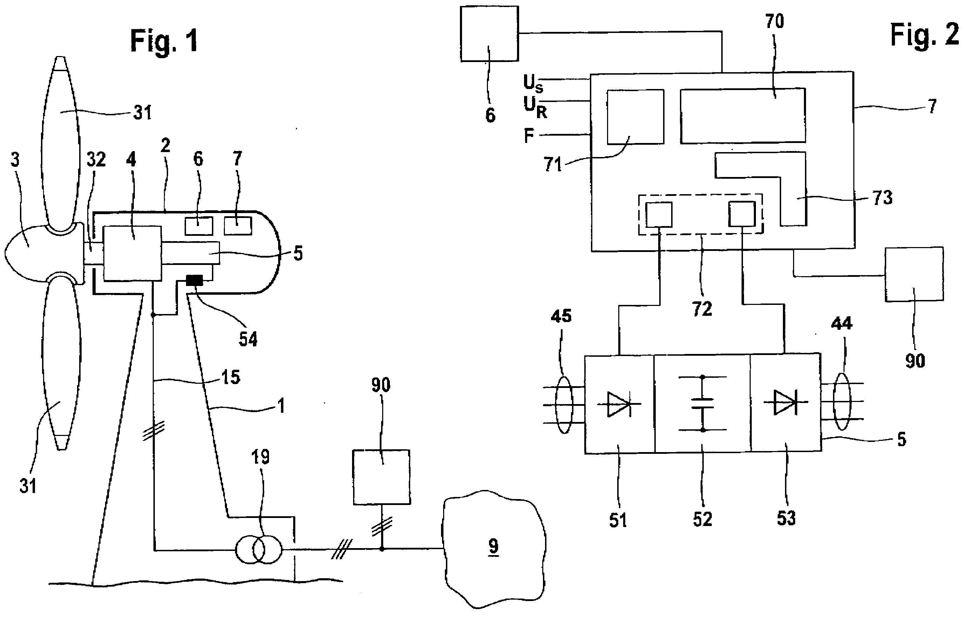

- Fig. 1: eine schematische Ansicht einer Windenergieanlage gemäß einem Ausführungsbeispiel der Erfindung;
- Fig. 2: eine Detailansicht eines Umrichters und einer Umrichterregelung der Windenergieanlage gemäß Fig. 1;
- Fig. 3: ein Ersatzschaltbild des Generators und sein Anschluss an ein Netz;
- Fig. 4: Kennlinien der Windenergieanlage gemäß Fig. 1; und
- Fig. 5: Diagramme zur Wirkung der Erfindung bei verschiedenen Betriebsbedingungen.

Eine gemäß einem Ausführungsbeispiel der Erfindung ausgeführte Windenergieanlage umfasst einen Turm 1, an dessen oberen Ende ein Maschinenhaus 2 in Azimutrichtung drehbar angeordnet ist. An einer Stirnseite des Maschinenhauses 2 ist ein Windrotor 3 mit mehreren (im dargestellten Beispiel 3) bezüglich ihres Anstellwinkels einstellbaren Rotorblätter 31 angeordnet. Über eine Welle 32 treibt der Windrotor 3 einen im Maschinenhaus 2 angeordneten Generator 4 an. Bei dem Generator handelt es sich um einen doppelt gespeisten Asynchrongenerator mit einem Stator und einem Rotor. Weiter sind in dem Maschinenhaus ein Umrichter 5 und eine Betriebssteuerung 6 für die Windenergieanlage angeordnet, die mit einer Umrichterregelung 7 verbunden ist. Letztere steuert die Umrichter und dessen Wechselrichter und stellt unmittelbar die elektrischen Parameter des Umrichters 5 ein. Die von dem Generator 4 in Verbindung mit dem Umrichter 5 bereitgestellte elektrische Leistung wird über eine Leitung 15 und einen üblicherweise im Turmfuß angeordneten Mittelspannungstransformator 19 an ein Netz 9 abgegeben. Bei dem Netz 9 kann es sich um ein öffentliches Übertragungsnetz oder um ein windparkinternes Verbindungsleitungssystem handeln.

Nachfolgend seien der elektrische Anschluss des Generators 4 in Verbindung mit dem Umrichter 5 und dessen Zusammenwirken mit der Umrichterregelung 7 näher beschrieben. Der doppelt gespeiste Asynchrongenerator 4 weist einen Rotor und einen Stator auf. An den Stator ist die Verbindungsleitung 15 unmittelbar angeschlossen. Die Spannung am Stator ist damit unmittelbar durch die Netzspannung bestimmt. Der Rotor des Generators 4 hingegen ist mit dem Umrichter 5 verbunden. Der Umrichter 5 ist in drei Teile gegliedert, einen generatorseitigen Wechselrichter 51, einen Zwischenkreis 52 und einen netzseitigen Wechselrichter 53. Die Wechselrichter 51, 53 sind mit vorzugsweise voll steuerbaren Schaltelementen ausgerüstet, wie GTO oder IGBT. Der generatorseitige Wechselrichter 51 ist an den Rotor des doppelt gespeisten Generators 4 angeschlossen, und speist über den Zwischenkreis 52 (der als Gleichspannungs- oder Stromkreis ausgeführt sein kann) den netzseitigen Wechselrichter 53, der wiederum über eine Drossel 54 mit der Anschlussleitung 15 verbunden ist.

Die Umrichterregelung 7 weist einen Regelungskern 70 auf, der die Schaltelemente der generatorseitigen sowie netzseitigen Wechselrichter 51, 53 ansteuert. Dies geschieht nach Maßgabe von Führungsgrößen, die von der übergeordneten Betriebssteuerung 6 angelegt sind. Im Normalbetrieb werden die Wechselrichter so angesteuert, dass Leistung vom Netz zum Rotor des Generators 4 fließt (untersynchroner Betrieb), keine Leistung durch den Umrichter 5 fließt (synchroner Betrieb) oder im Falle hoher Leistungserzeugung durch den Generator 4 elektrische Leistung aus der Rotorwicklung des Generators 4 entnommen und über den Umrichter 5 in das Netz eingespeist wird (übersynchroner Betrieb). Diese Betriebsweise der Umrichterregelung und des Umrichters ist an sich bekannt und braucht nicht näher erläutert zu werden. Sie ist in dem Regelkern 70 implementiert. Der Regelkern 70 stellt an seinen Ausgangsanschlüssen Steuersignale bereit, welche an die generatorseitigen und netzseitigen Wechselrichter 51, 53 angelegt sind. Gemäß der Erfindung bestimmt die Umrichterregelung die entsprechenden Steuersignale für die Wechselrichter sowohl in herkömmlicher Weise in einer Normalbetriebsart, aber zusätzlich auch für eine Spannungssenkbetriebsart. Mittels eines Modusselektors 72 wird die Betriebsart ausgewählt, und die jeweils dazugehörigen Signale an die Wechselrichter 51, 53 übermittelt.

Die Spannungssenkbetriebsart ist dazu vorgesehen, dass der generatorseitige Wechselrichter 51 derart angesteuert wird, dass der doppelt gespeiste Asynchrongenerator 4 untererregt betrieben wird. Dies bedeutet, dass zusätzlicher induktiver Blindstrom in den Rotor des Generators 4 eingespeist wird. Dieser Blindstrom wirkt senkend auf die Rotorspannung, so dass sicher verhindert werden kann, dass die Rotorspannung auch bei hoher Last mit extremen Drehzahlen (minimal oder maximal) Maximalgrenzwerte überschreitet, also insbesondere nicht größer wird als die maximal vom Umrichter 5 erzeugbare Spannung. Damit wird gewährleistet, dass auch in solchen extremen Fällen der Umrichter 5 wie gewünscht regeln und damit die gewünschten Arbeitspunkte einprägen kann.

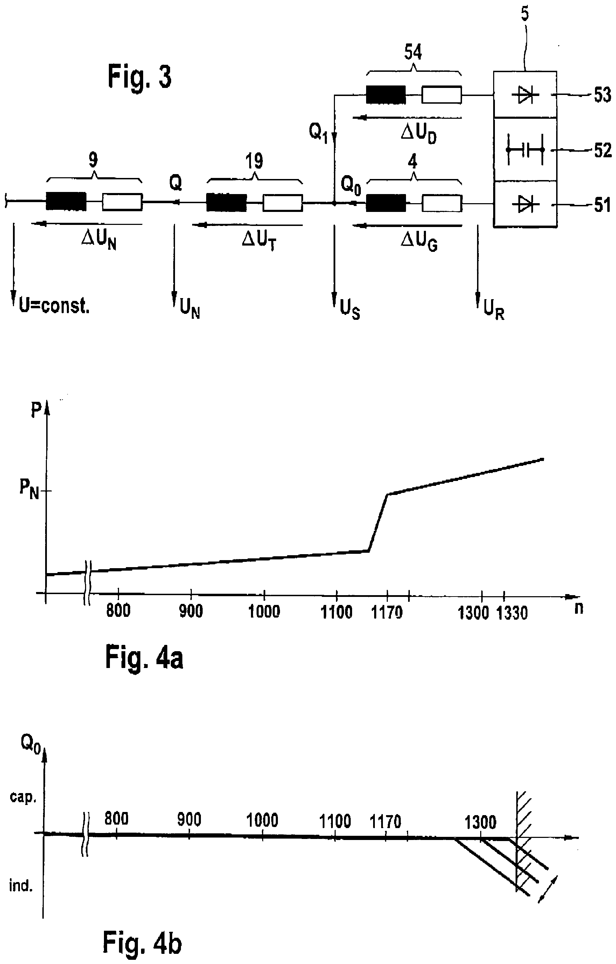

Zur Erläuterung der Funktionsweise der erfindungsgemäßen Rotorspannungsabsenkung durch Einspeisung induktiven Blindstroms wird auf Fig. 3 Bezug genommen. Dargestellt sind als konzentrierte Elemente die Wirk- und Blindwiderstände des Generators 4, der Netzdrossel 54, des Mittelspannungstrafos 19 sowie der Impedanz des als starr angenommenen (d. h. eine konstante Spannung aufweisenden) Netzes 9. Durch das zusätzliche Einspeisen von Blindleistung Q₀ in den Rotor des Generators 4 kann der Spannungsabfall über die Impedanz des Generators 4 erhöht werden. Die Rotorspannung U_{R} verringert sich damit gegenüber der Statorspannung U_{S}. Dies bedeutet, dass durch untererregten Betrieb erfindungsgemäß der Spannungsabfall über den Generator 4 in der Spannungssenkbetriebsart erhöht und so die Rotorspannung U_{R} wie gewünscht gesenkt werden kann.

Dieser Effekt kann dadurch gesteigert werden, dass durch die Blindleistung Q₀ und optional weitere (vorzeichengleiche) Blindleistung Q₁, des netzseitigen Wechselrichters 53 in entsprechender Weise der Spannungsabfall ΔU_{T} über die Impedanz des Mittelspannungstransformators 19 und der Spannungsabfall ΔU_{N} über die Impedanz des Netzes erhöht werden können. Auch hierbei wird durch zusätzliches Einspeisen von Blindleistung ein höherer Spannungsabfall erreicht, wodurch bezogen auf die Netzspannung U_{N} die Statorspannung U_{S} entsprechend vermindert wird, und damit unter Berücksichtigung des zusätzlichen Spannungsabfalls ΔU_{D} über der Drossel 54 und der internen elektrischen Übersetzung des Generators 4 die Rotorspannung weiter vermindert wird. Insgesamt ergibt sich damit eine signifikante Senkung der Rotorspannung durch ein zusätzliches Einspeisen von Blindleistung Q. Umgekehrt kann durch übererregten Betrieb des netzseitigen Wechselrichters 53 Blindleistung Q₁ mit umgekehrtem Vorzeichen so generiert werden, dass sie bezogen auf das Netz 9 die Blindleistung Q₀ (ganz oder teilweise) kompensiert.

Die Wirkung der erfindungsgemäßen Untererregung in der Spannungssenkbetriebsart ist in den Kennlinien in Fig. 4 dargestellt. Fig. 4a zeigt die Generatorkennlinie als Funktion der Wirkleistung P über der Drehzahl des Windrotors 3. Der Punkt, bei dem die Nennleistung abgegeben wird, liegt bei 1170 1/min. Bei schwächerem Wind stellt sich eine Drehzahl darunter ein, und es wird entsprechend weniger Wirkleistung abgegeben; bei stärkerem Wind wird auf den genannten Nennleistungspunkt bei 1170 1/min geregelt, und der darüber befindliche Drehzahlbereich mit entsprechend erhöhter Wirkleistungsabgabe nur dynamisch bei Böen erreicht. Entsprechend ist in Fig. 4b die Einspeisung von Blindleistung über der Drehzahl dargestellt. Man erkennt, dass bei hohen Drehzahlen durch Untererregung zusätzlicher Blindstrom erzeugt wird. Dieser wirkt, wie vorstehend im Zusammenhang mit Fig. 3 erläutert, spannungsabsenkend in Bezug auf die Rotorspannung. Dabei kann der Arbeitspunkt, ab dem zusätzlicher Blindstrom eingespeist wird, variiert werden, bspw. je nach Bedingung in Bezug auf Über- oder Unterspannung im Netz, Netzfrequenz oder von der Betriebssteuerung 6 angeforderte Blindleistung.

Die Ansteuerung der Spannungssenkbetriebsart geschieht auf folgende Weise. Der an den Regelkern 70 angeschlossene Modusselektor 72 wirkt mit einem Sollwertbestimmungsmodul 71 zusammen. An dieses sind je ein Eingangssignal für die Spannung an der Statorwicklung des Generators 4, welche direkt mittels eines ersten Spannungssensors 44 gemessen wird, und für die Spannung an der Rotorwicklung, welche ebenfalls direkt bestimmt wird mittels eines zweiten Spannungssensors 45 oder indirekt aus einem Ansteuersignal für einen Pulsbreitenmodulator des Umrichters 5 bestimmt wird, sowie ein Eingangssignal für die Netzfrequenz f angeschlossen, welches über einen nicht dargestellten Sensor bestimmt wird oder von der Betriebssteuerung 6 angelegt ist. Es kann auch die Verwendung alternativer oder zusätzlicher Parameter vorgesehen sein. Das Sollwertbestimmungsmodul 71 bestimmt anhand vorgebbarer Grenzwerte, wann eine Normalbetriebsart in die Spannungssenkbetriebsart umgeschaltet wird, und betätigt entsprechend den Modusselektor 72. Durch den Modusselektor 72 wird in der Spannungssenkbetriebsart der generatorseitige Wechselrichter 51 derart angesteuert, dass der Rotor des Generators 4 untererregt wird. Damit wird zusätzlich Blindleistung in den Rotor des Generators 4 eingespeist, wodurch die Rotorspannung abgesenkt wird. Es kann so eine Regelung für die Rotorspannung mit der Erregung des generatorseitigen Wechselrichters 51 als Stellgröße und der Netzfrequenz bzw. -spannung als Führungsgröße gebildet sein.

Zusätzlich kann vorgesehen sein, dass mittels eines Zusatzschaltmoduls 73 der Modusselektor auf den netzseitigen Wechselrichter 53 einwirkt. Er kann ebenfalls untererregt betrieben werden, oder übererregt betrieben werden, oder er kann im neutralen Betrieb bleiben. Der untererregte Betrieb wird dann gewählt, wenn die Spannungsabsenkung möglichst hoch sein soll und eine Rückwirkung auf das Netz keine oder nur eine geringe Rolle spielt; dieser Modus bietet sich insbesondere dann an, wenn die Rotorspannung mit höchster Priorität gesenkt werden soll. Die Übererregung würde gewählt, wenn die Auswirkungen auf das Netz möglichst gering gehalten werden sollen. Im Idealfall wird die Übererregung so eingestellt, dass sich am Netz (siehe Fig. 3) eine Kompensation mit dem über den Rotor untererregten Generator ergibt. Die zur Spannungsabsenkung genutzte induktive Blindleistung Q₀ des Generators 4 fließt dabei nicht oder zumindest nicht vollständig ins Netz, sondern fließt als Blindleistung Q₁ in den netzseitigen Wechselrichter 53, so dass keine bzw. nur kaum Blindleistung Q ins Netz 9 gelangt. Damit wird zwar nur eine etwas geringere Absenkung der Rotorspannung erreicht, dafür aber verhält sich die Windenergieanlage neutral gegenüber dem Netz.

Schließlich kann eine neutrale Einstellung gewählt werden, wenn der Umrichter 5 keine weitere Stromreserve zur Erzeugung von Blindstrom hat, also insbesondere bei hoher Belastung, bspw. aufgrund von Böen.

Alternativ oder zusätzlich kann das Zusatzschaltmodulmodul 73 dazu ausgebildet sein, mit einer Kompensationsanlage 90 zusammenzuwirken. Dies kann in der Weise erfolgen, dass die Kompensationsanlage 90 gezielt mit zur Erzeugung von Blindstrom genutzt wird. Da eine Kompensationsanlage in der Regel ohnehin vorhanden ist, kann auf diese Weise mit geringstem Zusatzaufwand das Blindleistungsangebot erhöht werden. Dies gilt insbesondere für die Betriebsart, bei der der netzseitige Wechselrichter 53 übererregt betrieben wird.

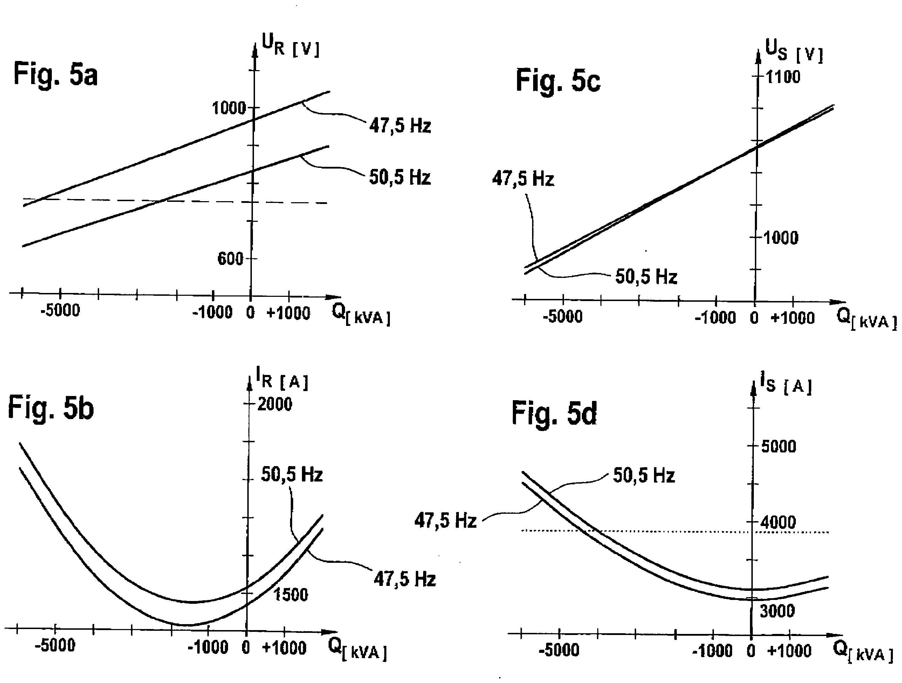

Die im Betrieb erreichten Kennlinien sind für ein Ausführungsbeispiel der Erfindung in Fig. 5 dargestellt. Fig. 5a zeigt die durch Einspeisung von Blindleistung erreichte Änderung der Rotorspannung, und zwar für verschiedene Netzfrequenzen. Auf der Abszisse ist die erzeugte Blindleistung abgetragen, wobei negative Werte für induktive Blindleistung stehen, also untererregtem Betrieb. Auf der Ordinate ist die mit der jeweils eingespeisten Blindleistung erreichte Rotorspannung U_{R} abgetragen, und zwar für Netzfrequenzen von 50,5 Hz und 47,5 Hz. Die Grenzspannung für die Rotorspannung beträgt 750 V (gestrichelte Linie). Man erkennt, dass mit der erfindungsgemäßen Einspeisung von Blindleistung im untererregten Betrieb die Rotorspannung auch unter ungünstigsten Bedingungen (Netzfrequenz 47,5 Hz) unterhalb des Grenzwerts gehalten werden kann.

In Fig. 5b ist entsprechend der Rotorstrom I_{R} über der Blindleistung Q dargestellt. Man erkennt, dass bei einem mäßigen untererregten Betrieb (Blindleistungseinspeisung zwischen -500 und -3000 kVA) der Rotorstrom die niedrigsten Werte erreicht, während bei größerer Einspeisung von Blindleistung der Rotorstrom deutlich zunimmt. In Fig. 5c und 5d sind entsprechend die Statorspannung U_{S} und der Statorstrom I_{S} dargestellt, wobei die gepunktete Linie den Nennstrom darstellt.

Die Diagramme in den Figuren 5a bis 5d beziehen sich auf einen Hochlastfall unter ungünstigen Bedingungen, mit einer Drehzahl des Rotors oberhalb der Nenndrehzahl (1330 1/min gegenüber 1170 1/min) und höchst zulässiger Spannung am Anschluss des Mittelspannungstransformators 19 an das Netz 9 in Höhe von 110 % der Netzspannung. Man erkennt, dass auch unter diesen äußerst ungünstigen Bedingungen durch die Einspeisung von Blindleistung die Spannungen unterhalb der Grenzwerte gehalten werden können. Damit kann dieser Drehzahlbereich auch bei hohen Netzspannungen benutzt werden, ohne dass es zu schädlicher Überspannung am Rotor des Generators 4 kommt. Da dieser Drehzahlbereich typischerweise nur im dynamischen Kurzzeitbetrieb erreicht wird (insbesondere bei Böen), belastet der zusätzliche Blindstrom zur Erzeugung der Blindleistung das aus Generator 4 und Umrichter 5 gebildete System kaum, so dass auch kurzfristige hohe Ströme toleriert werden können. Die Erfindung erreicht damit, dass auch unter ungünstigen Betriebsbedingungen, wie Überspannung im Netz, der obere Drehzahlbereich für den Betrieb der Anlage erhalten bleibt. Der nutzbare Drehzahlbereich wird damit nach oben erweitert, ohne dass dazu aufwendige, teure Hardware durch einen verstärkten Umrichter erforderlich ist.

## Patentansprüche

1. Windenergieanlage mit einem Windrotor (3), einem damit angetriebenen doppelt gespeisten Asynchrongenerator (4) und einem Umrichter (5) zur Einspeisung elektrischer Energie in ein Netz (9), wobei ein generatorseitiger Teil (51) des Umrichters an einen Rotor und ein netzseitiger Teil (53) an einen Stator des Generators (4) angeschlossen sind, und einer Steuereinrichtung (6) mit einer Umrichterreglung (7) vorgesehen ist, die den Umrichter (5) auf Basis von vorgegebenen Netzparametern regelt,
**dadurch gekennzeichnet, dass**
ein Modusselektor (72) vorgesehen ist, der mit der Umrichterregelung (7) derart zusammenwirkt, dass sie zwischen zwei Betriebsarten umschaltbar ist, einer Normalbetriebsart und einer Spannungssenkbetriebsart, bei der im übersynchronen Bereich die Erregung des Generators (4) gegenüber der Normalbetriebsart vermindert ist, wobei ein zusätzlicher Blindstrom in den Rotor eingespeist wird.

2. Windenergieanlage nach Anspruch 1,
**dadurch gekennzeichnet, dass**
ein Spannungssensor (44) vorgesehen ist, welcher die am Stator des Generators (4) anliegende Spannung bestimmt und mit dem Modusselektor (72) derart zusammenwirkt, dass die Erregung des Generators (4) abhängig von der Statorspannung vermindert ist.

3. Windenergieanlage nach einem der vorangehenden Ansprüche,
**dadurch gekennzeichnet, dass**
in der Spannungssenkbetriebsart eine Regelung der Rotorspannung auf einen einstellbaren Niederwert erfolgt.

4. Windenergieanlage nach Anspruch 3,
**dadurch gekennzeichnet, dass**
der Modusselektor (72) mit einer Sollwertbestimmungseinrichtung (71) zusammenwirkt, die den Niederwert in Abhängigkeit von der netzseitigen Spannung und/oder der Netzfrequenz bestimmt.

5. Windenergieanlage nach einem der vorangehenden Ansprüche,
**dadurch gekennzeichnet, dass**
ein Zusatzschaltmodul (73) für den netzseitigen Wechselrichter (53) vorgesehen ist, der diesen in eine unter-, neutral- oder übererregte Betriebsart bringt.

6. Windenergieanlage nach Anspruch 5,
**dadurch gekennzeichnet, dass**
das Zusatzschaltmodul (73) so ausgebildet ist, den netzseitigen Wechselrichter (53) für maximale Absenkung der Rotorspannung in die untererregte Betriebsart zu bringen.

7. Windenergieanlage nach einem der Ansprüche 5 oder 6,
**dadurch gekennzeichnet, dass**
das Zusatzschaltmodul (73) derart mit einer Kompensationsanlage (90) verbunden ist, dass sie den netzseitigen Wechselrichter (53) unterstützt.

8. Verfahren zum Regeln einer Windenergieanlage mit einem durch einen Windrotor (3) angetriebenen doppelt gespeisten Asynchrongenerator (4), welcher mit einem Umrichter (5) elektrische Leistung in ein Netz (9) einspeist, wobei eine Steuereinrichtung (6) mit einer Umrichterregelung (7) vorgesehen ist, die den Umrichter auf Basis von vorgegebenen Netzparametern regelt,
**gekennzeichnet durch**
Umschalten zwischen einer Normalbetriebsart und einer Spannungssenkbetriebsart, bei der die Erregung des doppelt gespeisten Asynchrongenerators (4) gegenüber der Normalbetriebsart vermindert wird, wobei ein zusätzlicher Blindstrom in einen Rotor des Asynchrongenerators (4) eingespeist wird.

9. Verfahren nach Anspruch 8,
**dadurch gekennzeichnet, dass**
eine netzseitig am Stator anliegende Spannung bestimmt wird und der Generator (4) abhängig von dieser Spannung erregt wird.

10. Verfahren nach Anspruch 8 oder 9,
**dadurch gekennzeichnet, dass**
in der Spannungssenkbetriebsart eine Regelung der Rotorspannung auf einen einstellbaren Niederwert erfolgt.

11. Verfahren Anspruch 10,
**dadurch gekennzeichnet, dass**
der Niederwert in Abhängigkeit von der Statorspannung und/oder Netzfrequenz bestimmt wird.

12. Verfahren nach einem der Ansprüche 8 bis 11,
**dadurch gekennzeichnet, dass**
zusätzlich die Erregung des netzseitigen Wechselrichters (53) verändert wird.

13. Verfahren nach Anspruch 12,
**dadurch gekennzeichnet, dass**
der netzseitige Wechselrichter (53) für maximale Absenkung der Rotorspannung in der untererregten Betriebsart betrieben wird.

14. Verfahren nach Anspruch 12 oder 13,
**dadurch gekennzeichnet, dass**
Zuschalten einer Kompensationsanlage (90) zur Unterstützung des netzseitigen Wechselrichter (53) in der Spannungssenkbetriebsart.

15. Verfahren nach einem der Ansprüche 8 bis 14,
**dadurch gekennzeichnet, dass**
Messen der Rotorspannung und aktivieren von Schutzeinrichtungen oder durchführen anderer Regelungsverfahren am Überschreiten vorgebbaren Grenzwertes, um die Rotorspannung unter den vorgebbaren Grenzwert abzusenken.

## Claims

1. Wind energy installation having a wind rotor (3), a double-fed asynchronous generator (4) driven by the wind rotor (3), and a converter (5) for feeding electrical power into a network (9), with a part (51) on the generator side of the converter being connected to a rotor, and a part (53) on the network side being connected to a stator of the generator (4), and with a control device (6) with converter regulation (7) being provided, which regulates the converter (5) on the basis of predetermined network parameters,
**characterized in that**
a mode selector (72) is provided which interacts with the converter regulation (7) such that it can be switched between two operating modes, a normal operating mode and a reduced voltage operating mode, in which the excitation of the generator (4) is reduced in comparison to the normal operating mode in the super-synchronous range, with an additional reactive current being fed into the rotor.

2. Wind energy installation according to Claim 1,
**characterized in that**
a voltage sensor (44) is provided, which determines the voltage present on the stator of the generator (4) and interacts with the mode selector (72) such that the excitation of the generator (4) is reduced as a function of the stator voltage.

3. Wind energy installation according to one of the preceding claims,
**characterized in that**,
in the reduced voltage operating mode, the rotor voltage is regulated at a selectable low value.

4. Wind energy installation according to Claim 3,
**characterized in that**
the mode selector (72) interacts with a nominal value determining device (71), which determines the low value as a function of the voltage on the network side and/or the network frequency.

5. Wind energy installation according to one of the preceding claims,
**characterized in that**
an additional switching module (73) is provided for the network-side inverter (53), which switches the latter to an under-excited, neutrally excited or over-excited operating mode.

6. Wind energy installation according to Claim 5,
**characterized in that**
the additional switching module (73) is designed to switch the network-side inverter (53) to the under-excited operating mode, in order to reduce the rotor voltage to the maximum extent.

7. Wind energy installation according to one of Claims 5 or 6,
**characterized in that**
the additional switching module (73) is connected to a compensation installation (90) such that the latter supports the network-side inverter (53).

8. Method for regulation of a wind energy installation having a double-fed asynchronous generator (4) which is driven by a wind rotor (3) and uses a converter (5) to feed electrical power into a network (9), with a control device (6) with converter regulation (7) being provided, which regulates the converter on the basis of predetermined network parameters,
**characterized by**
switching between a normal operating mode and a reduced voltage operating mode, in which the excitation of the double-fed asynchronous generator (4) is reduced in comparison to the normal operating mode, with an additional reactive current being fed into a rotor of the asynchronous generator (4).

9. Method according to Claim 8,
**characterized in that**
a voltage which is present on the network side of the stator is determined, and the generator (4) is excited as a function of this voltage.

10. Method according to Claim 8 or 9,
**characterized in that**,
in the reduced voltage operating mode, the rotor voltage is regulated at an adjustable low value.

11. Method according to Claim 10,
**characterized in that**
the low value is determined as a function of the stator voltage and/or network frequency.

12. Method according to one of Claims 8 to 11,
**characterized in that**
the excitation of the network-side inverter (53) is additionally varied.

13. Method according to Claim 12,
**characterized in that**
the network-side inverter (53) is operated in the under-excited operating mode in order to reduce the rotor voltage to the maximum extent.

14. Method according to Claim 12 or 13,
**characterized in that**
connection of a compensation installation (90) in order to support the network-side inverter (53) in the reduced voltage operating mode.

15. Method according to one of Claims 8 to 14,
**characterized in that**
the rotor voltage is measured and protective devices are activated, or other regulation methods are carried out when a predeterminable limit value is exceeded, in order to reduce the rotor voltage below the predeterminable limit value.

## Revendications

1. Eolienne dotée d'un rotor éolien (3) qui entraîne un générateur asynchrone (4) à double alimentation et d'un convertisseur (5) qui injecte de l'énergie électrique dans un réseau (9),
une partie (51) de convertisseur située du côté du générateur étant raccordée à un rotor et une partie (53) située côté réseau étant raccordée à un stator du générateur (4),
un dispositif de commande (6) doté d'une régulation (7) de convertisseur étant prévu et régulant le convertisseur (5) sur la base de paramètres prédéterminés du réseau,
**caractérisée en ce que**
un sélecteur de mode (72) est prévu et coopère avec la régulation (7) de convertisseur de manière à la commuter entre deux modes de fonctionnement, un mode de fonctionnement normal et un mode de fonctionnement à abaissement de tension dans lequel l'excitation du générateur (4) est diminuée par rapport au mode de fonctionnement normal dans la zone hyper-synchrone, un courant aveugle supplémentaire étant injecté dans le rotor.

2. Eolienne selon la revendication 1, **caractérisée en ce qu'**un capteur de tension (44) est prévu, détermine la tension appliquée sur le stator du générateur (4) et coopère avec le sélecteur de mode (72) de telle sorte que l'excitation du générateur (4) soit diminuée en fonction de la tension du stator.

3. Eolienne selon l'une des revendications précédentes, **caractérisée en ce qu'**en mode de fonctionnement à abaissement de tension, la régulation de la tension du rotor s'effectue à une valeur basse réglable.

4. Eolienne selon la revendication 3, **caractérisée en ce que** le sélecteur de mode (72) coopère avec un dispositif (71) de définition de valeurs de consigne qui définit la valeur basse en fonction de la tension du réseau et/ou de la fréquence du réseau.

5. Eolienne selon l'une des revendications précédentes, **caractérisée en ce qu'**un module supplémentaire de commutation (73) est prévu pour l'onduleur (53) situé côté réseau et amène ce dernier dans un mode de fonctionnement sous-excité, neutre ou surexcité.

6. Eolienne selon la revendication 5, **caractérisée en ce que** le module supplémentaire de commutation (73) est configuré de manière à amener l'onduleur (53) situé côté réseau en mode de fonctionnement sous-excité pour abaisser au maximum la tension du rotor.

7. Eolienne selon l'une des revendications 5 ou 6, **caractérisée en ce que** le module supplémentaire de commutation (73) est raccordé à une installation de compensation (90) de manière à ce que cette dernière soutienne l'onduleur (53) situé côté réseau.

8. Procédé de régulation d'une éolienne présentant un générateur asynchrone (4) à double alimentation entraîné par un rotor éolien (3) et injectant de l'énergie électrique dans un réseau (9) par un convertisseur (5),
un dispositif de commande (6) doté d'une régulation (7) de convertisseur étant prévu et régulant le convertisseur (5) sur la base de paramètres prédéterminés du réseau,
**caractérisé par**
la commutation entre deux modes de fonctionnement, un mode de fonctionnement normal et un mode de fonctionnement à abaissement de tension dans lequel l'excitation du générateur asynchrone (4) est diminuée par rapport au mode de fonctionnement normal dans la zone hyper-synchrone, un courant aveugle supplémentaire étant injecté dans le rotor du générateur asynchrone (4).

9. Procédé selon la revendication 8, **caractérisé en ce que** la tension appliquée par le réseau sur le stator est déterminée et **en ce que** le générateur (4) est excité en fonction de cette tension.

10. Procédé selon la revendication 8 ou 9, **caractérisé en ce qu'**en mode de fonctionnement à abaissement de tension, la régulation de la tension du rotor s'effectue à une valeur basse réglable.

11. Procédé selon la revendication 10, **caractérisé en ce que** la valeur basse est définie en fonction de la tension du stator et/ou de la fréquence du réseau.

12. Procédé selon l'une des revendications 8 à 11, **caractérisé en ce qu'**en plus, l'excitation de l'onduleur (53) situé côté réseau est modifiée.

13. Procédé selon la revendication 12, **caractérisé en ce que** l'onduleur (53) situé côté réseau est conduit dans le mode de fonctionnement sous-excité en vue d'abaisser au maximum la tension du réseau.

14. Procédé selon la revendication 12 ou 13, **caractérisé en ce que** le branchement d'une installation de compensation (90) pour soutenir l'onduleur (53) situé côté réseau en mode de fonctionnement à abaissement de tension.

15. Procédé selon l'une des revendications 8 à 14, **caractérisé par** la mesure de la tension du rotor de l'activation du dispositif de protection ou l'exécution d'autres opérations de régulation lorsqu'une valeur de seuil prédéterminée est dépassée, pour abaisser la tension du rotor en dessous de la valeur limite prédéterminée.
